# EUROPEAN PATENT APPLICATION

(11) **EP 4 589 969 A2**
(43) Date of publication of application: **23.07.2025**
(21) Application number: 25152605.9
(22) Date of filing: 17.01.2025
(51) Int. Cl.: H04N 23/51, H04N 1/21, H04N 23/63, H04N 23/667, H04N 101/00

(54) **DIGITAL CAMERA AND DIAL OF DIGITAL CAMERA**

(30) Priority: 18.01.2024 JP 2024005874; 28.08.2024 JP 2024146189
(71) Applicant: FUJIFILM Corporation, Tokyo 106-8620 (JP)
(72) Inventor: UENO, Hayato, Saitama-shi, 331-9624 (JP); YAMADA, Takanori, Saitama-shi, 331-9624 (JP)
(74) Representative: Dehns Germany Partnerschaft mbB

(57) **Abstract**

Provided are a digital camera that enables image feed with a simple operation in a case in which a captured image is checked and a dial of the digital camera.

A digital camera includes a grip portion that is provided in a camera body, a lever that is provided in an end portion of the grip portion, a display that displays a captured image obtained by capturing an object image, and a processor. The processor is configured to hide at least a portion of a first captured image displayed on the display and to display a second captured image different from the first captured image on the display in response to an operation of the lever.

## Description

### BACKGROUND OF THE INVENTION

### 1. Field of the Invention

The present invention relates to a digital camera that displays a captured image and a dial of the digital camera.

### 2. Description of the Related Art

In a digital camera disclosed in JP2007-53616A, a plurality of images are continuously captured by one release operation, tag data is added to the plurality of images continuously captured, and the plurality of images are stored in one image file. The plurality of images stored in the image file are displayed in a list on a display device of the digital camera on the basis of the tag data. In this digital camera, in a case where a switching button or an operation dial is operated, the images displayed on the display device are advanced frame by frame, and the images captured in the past are displayed.

### SUMMARY OF THE INVENTION

However, in the digital camera disclosed in JP2007-53616A, in a case where a user wants to check the past image, the user needs to take his or her hand off a grip of a camera body in order to operate the switching button or the operation dial, which is inconvenient. In addition, even in a case where the image is fed by a touch panel or the like provided in the display device, the hand is taken off the grip, which is very troublesome.

An object of the present invention is to provide a digital camera that enables image feed with a simple operation in a case where a captured image is checked and a dial of the digital camera.

According to an aspect of the present invention, there is provided a digital camera comprising: a camera body having a front surface and a rear surface; an imaging element that captures an object image; a grip portion that is provided at any one of a left end or a right end in a case where the camera body is viewed from the front surface; a first member that is provided near the grip portion and on an upper surface side of the camera body; a display that is disposed on the rear surface of the camera body and displays a captured image obtained by capturing the object image with the imaging element; and a processor. The processor is configured to hide at least a portion of a first captured image displayed on the display and to display a second captured image different from the first captured image on the display in response to an operation of the first member.

Preferably, the second captured image is an image captured before the first captured image is captured, and the processor is configured to change the first captured image displayed on the display to the second captured image in a case where the first member is rotated in a state in which the camera body is viewed from above.

Preferably, the digital camera has a power supply, and the first member is at a first position where the first member does not protrude from an outer shape of the camera body in a state in which the camera body is viewed from above in a case where the power supply is in an off state and is changed to a second position where the first member protrudes from the outer shape of the camera body in a state in which the camera body is viewed from above in a case where the power supply is switched from the off state to an on state.

Preferably, the digital camera further comprises a locking mechanism that locks the first member, and the first member is locked by the locking mechanism at the first position and is unlocked at the second position.

Preferably, the digital camera further comprises: a second member that is operatively associated with the first member; a third member that is engaged with the second member; a fourth member that is related to an operation of the power supply; and a biasing member that biases the second member. Preferably, the first member, the second member, and the fourth member are rotatable about a first axis, and the third member is rotatable about a second axis. Preferably, in a case where the fourth member is at a power-off position, a protruding portion of the second member and a recessed portion of the third member are fitted to each other to lock the first member at the first position. Preferably, in a case where the fourth member is at a power-on position, the third member is rotated in operative association with a rotation of the fourth member in a first direction, the protruding portion of the second member and the recessed portion of the third member are disengaged from each other to rotate the first member to the second position along the first direction, and the disengagement is maintained by the biasing member.

Preferably, the biasing member biases the first member in a direction intersecting an optical axis. Preferably, in a case where the fourth member is switched from the power-on position to the power-off position, the third member is rotated in operative association with a rotation of the fourth member in a second direction, and the protruding portion of the second member and the recessed portion of the third member are fitted to each other to lock the first member at the first position.

Preferably, the second captured image is an image captured before the first captured image is captured, and the processor is configured to change the second captured image displayed on the display to the first captured image in a case where the first member is rotated clockwise in a state in which the camera body is viewed from above.

Preferably, a plurality of captured images are displayed on the display, and the processor is configured to, in a case where the first member is operated once, hide a captured image disposed at one end among the plurality of captured images displayed on the display and to display, on the display, a captured image disposed immediately before a captured image disposed at the other end among the plurality of captured images displayed on the display.

Preferably, a plurality of captured images are displayed on the display, and the processor is configured to, in a case where the first member is operated once, hide all of the plurality of captured images displayed on the display and to display, on the display, captured images from a captured image disposed immediately before a captured image disposed at the other end among the plurality of captured images displayed on the display to a captured image disposed the plurality of images before the captured image disposed at the other end.

Preferably, the processor is configured to change a replacement amount of the captured image displayed on the display according to an operation amount of the first member. Preferably, the processor is configured to change a replacement speed of the captured image displayed on the display according to an operation amount of the first member. Preferably, the processor is configured to set a captured image feed operation assigned to the operation of the first member in response to an input operation. Preferably, in a case where an upper surface of the camera body faces upward in a vertical direction, a length of the imaging element in the vertical direction is larger than a length of the imaging element in a horizontal direction.

Preferably, the digital camera further comprises a fifth member that performs an imaging instruction operation. Preferably, the first member is rotatable about a first axis, and the fifth member is disposed along the first axis. Preferably, in a case where the first member is rotated to a third position where the first member protrudes from an outer shape of the camera body in a state in which the camera body is viewed from above, a restriction on the imaging instruction operation is released. Preferably, the digital camera further comprises a second member that is rotated about the first axis in operative association with the first member, and a contact-type sensor that detects the third position is disposed in the second member. Preferably, the digital camera further comprises a sixth member that is disposed along a first axis, and the first member is disposed between the camera body and the sixth member

According to another aspect of the present invention, there is provided a dial of a digital camera. The dial comprises: a first member; a second member that is operatively associated with the first member; a third member that is engaged with the second member; a fourth member that is related to an operation of a power supply; and a biasing member that biases the second member. The first member, the second member, and the fourth member are rotatable about a first axis, and the third member is rotatable about a second axis. In a case where the fourth member is at a power-off position, a protruding portion of the second member and a recessed portion of the third member are fitted to each other to lock the first member at a first position. In a case where the fourth member is at a power-on position, the third member is rotated in operative association with a rotation of the fourth member in a first direction, the protruding portion and the recessed portion are disengaged from each other to rotate the first member to a second position along the first direction, and the disengagement is maintained by the biasing member.

Preferably, the biasing member biases the first member in a direction intersecting an optical axis. Preferably, in a case where the fourth member is switched from the power-on position to the power-off position, the third member is rotated in operative association with a rotation of the fourth member in a second direction, and the protruding portion and the recessed portion are fitted to each other to lock the first member at the first position.

Preferably, the dial of a digital camera further comprises a fifth member that performs an imaging instruction operation, and the fifth member is disposed along the first axis. Preferably, in a case where the first member is rotated to a third position along the first direction, a restriction on the imaging instruction operation is released. Preferably, a contact-type sensor that detects the third position is disposed in the second member. Preferably, the dial of a digital camera further comprises a sixth member that is disposed along a first axis, and the first member is disposed between the camera body and the sixth member.

According to another aspect of the present invention, there is provided a dial of a digital camera. The dial comprises a member related to an operation of a power supply, a member for an operation related to image display, a member for an operation related to camera settings, and a member related to an imaging instruction operation that are disposed along a first axis.

According to the present invention, in a case where the user checks the captured image, it is possible to perform image advance with a simple operation.

### BRIEF DESCRIPTION OF THE DRAWINGS

Fig. 1 is a front perspective view showing a digital camera.
Fig. 2 is a rear perspective view showing the digital camera.
Fig. 3 is a diagram showing a configuration around a lever.
Fig. 4 is a diagram showing a case where the digital camera is in an off state (A), a case where the digital camera is switched from the off state to an on state (B), and a case where the digital camera is in the on state and the lever is rotated (C).
Fig. 5 is a block diagram showing a schematic configuration of the digital camera.
Fig. 6 is a rear view showing the digital camera in which a captured image is displayed on a display.
Fig. 7 is a diagram showing a case where the captured image displayed on the display is changed from a first captured image (A) to a second captured image (B) by an operation of the lever.
Fig. 8 is a diagram showing a first modification example in which the captured image displayed on the display is changed from the second captured image (A) to the first captured image (B) by the operation of the lever.
Fig. 9 is a rear view showing a digital camera according to a second embodiment.
Fig. 10 is a diagram showing a change from a state (A) in which the first captured image and the second captured image are displayed to a state (B) in which the first captured image is hidden and a third captured image is displayed in response to the operation of the lever.
Fig. 11 is a diagram showing a second modification example in which a state (A) in which the first captured image and the second captured image are displayed is changed to a state (B) in which the third captured image and a fourth captured image are displayed in response to the operation of the lever.
Fig. 12 is a diagram showing a third modification example in which a replacement amount of the captured image displayed on the display is changed according to an operation amount of the lever.
Fig. 13 is a conceptual diagram showing a dial of the digital camera.
Fig. 14 is a diagram showing a rotation aspect of the lever, a rotary ring, a latch, and a power lever.
Fig. 15 is a diagram showing the lever, the rotary ring, the latch, and the power lever in a case where power is turned off.
Fig. 16 is a diagram showing the lever, the rotary ring, the latch, and the power lever in a case where power is turned on.
Fig. 17 is a diagram showing the lever, the rotary ring, the latch, and the power lever in a case where power is switched from an on state to an off state.
Fig. 18 is a diagram showing the rotary ring in a case where the lever is rotated from a second position to a third position.
Fig. 19 is a cross-sectional view showing the dial of the digital camera and the vicinity thereof.

### DESCRIPTION OF THE PREFERRED EMBODIMENTS

### First Embodiment

### Outline of Camera

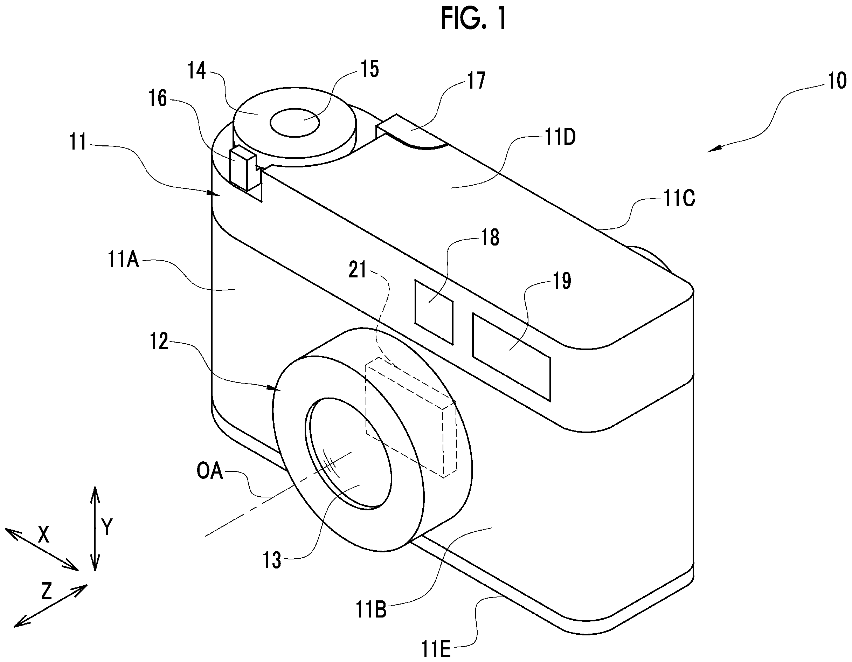

As shown in Fig. 1, a digital camera 10 comprises a camera body 11 and a lens barrel 12. The digital camera 10 is an example of a camera according to the present invention. The camera body 11 has a horizontally long box shape in which a dimension in a left-right direction is larger than a dimension in an up-down direction in a front view.

The camera body 11 is provided with a grip portion 11A. The lens barrel 12 is fixed to the camera body 11 and is provided with an imaging optical system 13. The imaging optical system 13 forms an image of object light on an imaging element 21. In addition, in the following description, in a case where a photographer takes a picture of an object positioned in a horizontal direction, it is assumed that an object-side surface of the camera body 11 in an optical axis direction Z is referred to as a front surface 11B, a photographer-side surface of the camera body 11 in the optical axis direction Z is referred to as a rear surface 11C, an upper surface of the camera body 11 in a vertical direction Y is referred to as an upper surface 11D, and a lower surface of the camera body 11 in the vertical direction Y is referred to as a lower surface 11E. Further, the optical axis direction Z is a direction that is parallel to an optical axis OA of the imaging optical system 13. In addition, the vertical direction Y is a direction that is orthogonal to the horizontal direction X and the optical axis direction Z.

In addition, in the present specification, the term "parallel" includes not only "completely parallel" but also "substantially parallel" in the sense of including an error that is generally allowed in the technical field to which the technology of the present disclosure belongs and that is allowed within a range that does not deviate from the technology of the present disclosure. Further, in the present specification, the term "orthogonal" includes not only "completely orthogonal" but also "substantially orthogonal" in the sense of including an error that is generally allowed in the technical field to which the technology of the present disclosure belongs and that is allowed within a range that does not deviate from the technology of the present disclosure.

The grip portion 11A is provided in a right end portion in a case where the camera body 11 is viewed from the front surface 11B. Further, the present invention is not limited thereto, and the grip portion 11A may be provided in a right end portion in a case where the camera body 11 is viewed from the front surface 11B. The grip portion 11A has a semi-cylindrical shape that connects the front surface 11B and the rear surface 11C of the camera body 11 and has a shape that is easy for the photographer to grip. In addition, the grip portion 11A is not limited to the semi-cylindrical shape and may have any shape that is easy for the photographer to grip.

A mode dial 14, a release switch 15, a power switch 16, a lever 17 (first member), and the like are provided on the upper surface 11D of the camera body 11. The digital camera 10 comprises a still image capture mode and a video capture mode that can be switched by, for example, the mode dial 14. Further, the lever 17 (first member) is an example, and may have any other forms as long as it is a member that is rotated or may be a rotary member such as a dial.

In addition to the lens barrel 12, a flash device 18 and an illumination device 19 are provided on the front surface 11B of the camera body 11. In the still image capture mode of the digital camera 10, the flash device 18 irradiates the object with illumination light forcibly or in a case where an exposure value of the object is less than a predetermined value in operative association with the release of a shutter. On the other hand, the illumination device 19 constantly irradiates the object with the illumination light in a case where the digital camera 10 is in the video capture mode. In addition, for an imaging operation instruction by the release switch 15, the imaging operation instruction may be normally restricted, and the restriction on the imaging operation instruction may be released in a case where the user performs a release operation.

### Configuration around Lever

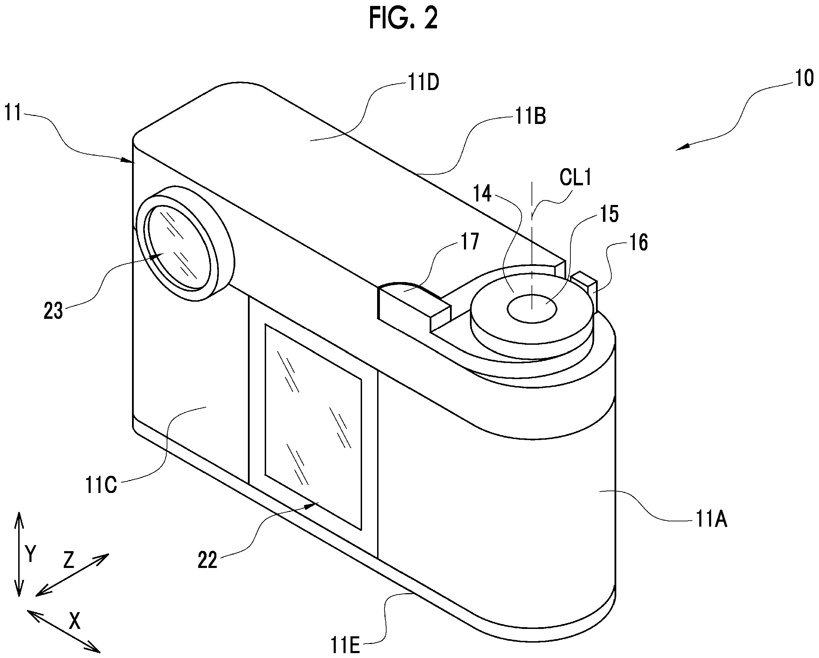

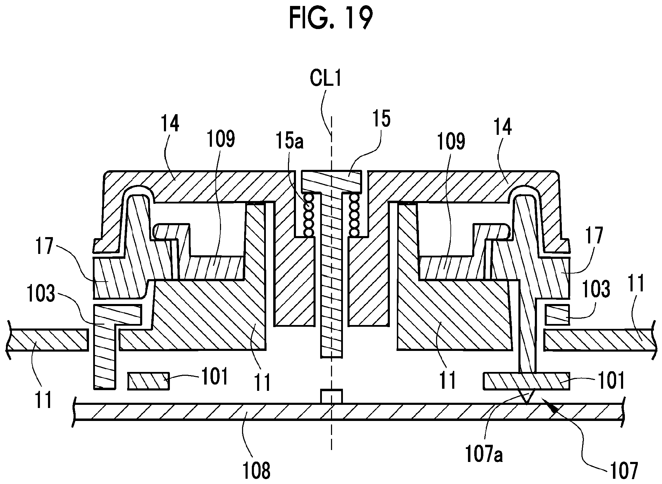

As shown in Fig. 2, the lever 17 is provided in the vicinity of the grip portion 11A and on the upper surface 11D of the camera body 11. The lever 17 is provided to form a laminated structure together with the mode dial 14 and the release switch 15. The mode dial 14 is formed in a disk shape. The release switch 15 is formed in a disk shape that is slightly smaller than the mode dial 14 and is disposed along a central axis CL1 coaxial with the mode dial 14. Further, a spring 15a (see Fig. 19) is provided in the release switch 15, and a pressing operation can be performed by a biasing force of the spring 15a.

The lever 17 protrudes from an outer peripheral surface of the mode dial 14 and is attached to be rotatable about the central axis CL1 of the mode dial 14. The lever 17 is disposed at a position where the photographer can place a finger on the lever 17 to rotate the lever 17 in a case where the photographer grips the grip portion 11A. In a case where the captured image is displayed on the display 22, the lever 17 is used for an image feed operation which will be described below.

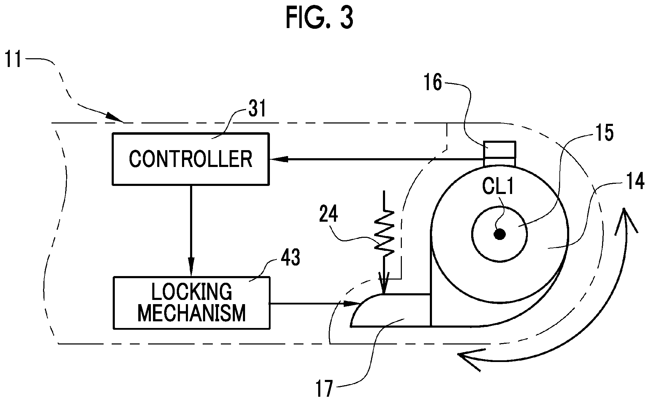

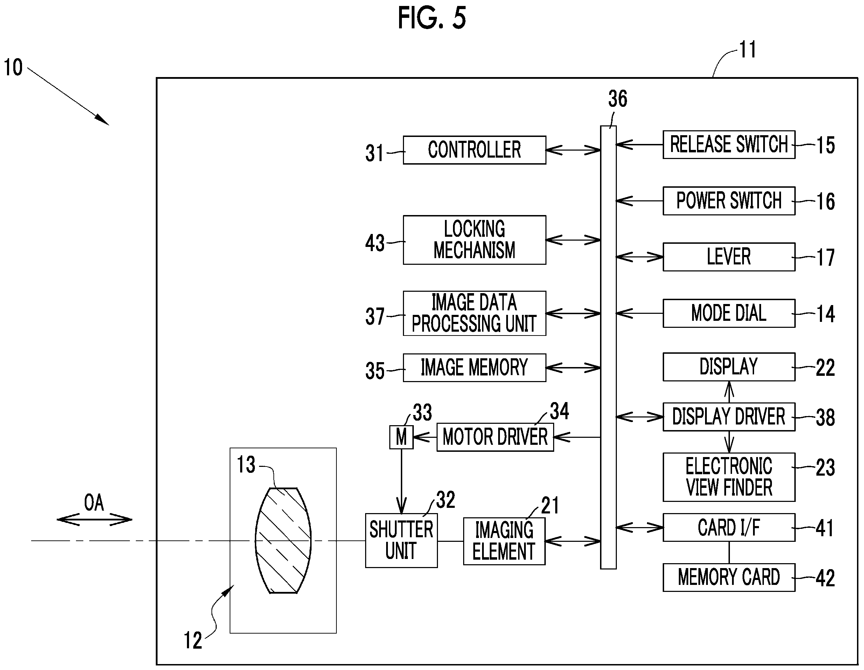

As shown in Fig. 3, a spring member 24, a controller 31 (see Fig. 5) which will be described later, and a locking mechanism 43 (see Fig. 5) are provided in the camera body 11. The locking mechanism 43 includes, for example, a locking member (not shown) that locks the lever 17 (first member), an actuator (not shown) that operates the locking member, and the like. The locking mechanism 43 is for locking the lever 17 and locks the lever 17 with the locking member in a case where the digital camera 10 is turned off. Therefore, the rotation of the lever 17 about the central axis CL1 of the mode dial 14 is restricted. The spring member 24 biases the lever 17.

The power switch 16 is a push-type switch and is disposed in the vicinity of the mode dial 14 and the lever 17. The digital camera 10 has a power supply (not shown). In a case where the power switch 16 is pressed, the digital camera 10 is turned on. Then, in a case where the power switch 16 is pressed, the digital camera 10 is turned off. Hereinafter, similarly, the on and off states of the digital camera 10 are alternately switched in response to the pressing of the power switch 16.

The locking mechanism 43 is switched between a locking state and an unlocking state by the controller 31. In a case where the digital camera 10 is turned on in response to the pressing of the power switch 16, the controller 31 controls the locking mechanism 43 such that the locking mechanism 43 is switched to the unlocking state in which the locking of the lever 17 by the locking member of the locking mechanism 43 is released. On the other hand, in a case where the digital camera 10 is switched from the off state to the on state in response to the pressing of the power switch 16, the controller 31 controls the locking mechanism 43 such that the locking mechanism 43 is switched to the locking state in which the lever 17 is locked by the locking member of the locking mechanism 43.

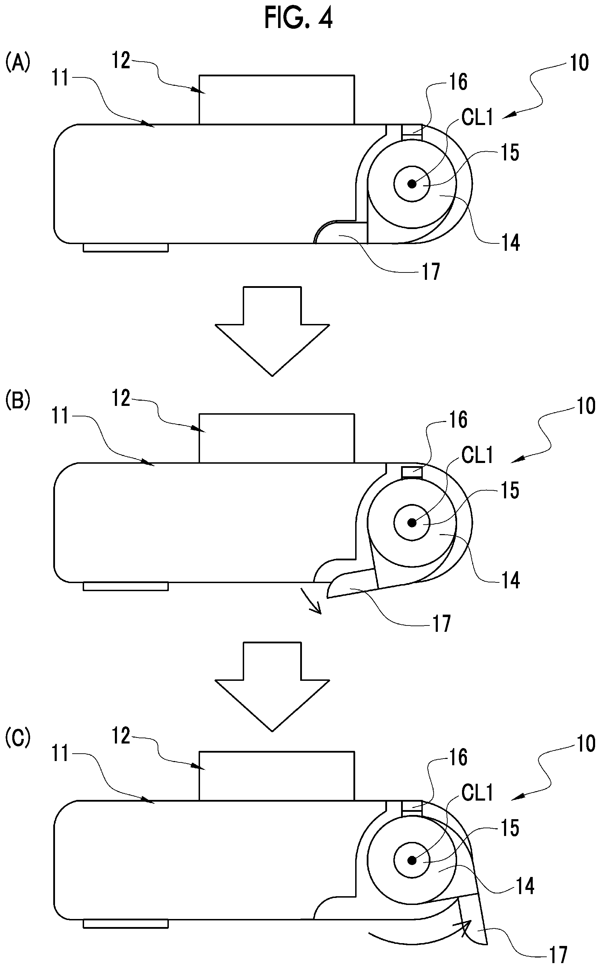

As shown in (A) of Fig. 4, in a case where the locking mechanism 43 is in the locking state, that is, in a case where the digital camera 10 is turned off, the lever 17 is in a posture along the camera body 11. Specifically, the posture along the camera body 11 means a posture in which the lever 17 is located at a position (first position) where the lever 17 does not protrude from the outer shape of the camera body 11 in a state in which the camera body 11 is viewed from above. At the first position, the lever 17 is locked by the locking mechanism 43.

As shown in (B) of Fig. 4, in a case where the locking mechanism 43 is in the unlocking state, that is, in a case where the digital camera 10 is switched from the off state to the on state, the restriction on the rotation of the lever 17 by the locking member is released. The lever 17 whose rotation restriction by the locking member has been released is biased by the spring member 24 and is rotated by a predetermined amount (predetermined rotation angle) in the counterclockwise direction of the central axis CL1. Therefore, the posture of the lever 17 is changed in a direction in which the lever 17 is spaced apart from the camera body 11 by a predetermined distance. Specifically, the lever 17 being spaced apart from the camera body 11 by the predetermined distance means that the lever 17 is located at a position (second position) where the lever 17 protrudes from the outer shape of the camera body 11 in a state in which the camera body 11 is viewed from above. At the second position, the lever 17 is unlocked.

As shown in (C) of Fig. 4, in a case where the digital camera 10 is turned on, the restriction on the rotation of the lever 17 is released, and the lever 17 is spaced apart from the camera body 11. Therefore, the photographer who grips the grip portion 11A can place the finger on the lever 17 and easily rotate the lever 17 to a third position in the counterclockwise direction of the central axis CL1. In a case where the lever 17 is rotated in the counterclockwise direction of the central axis CL1 by an amount exceeding the predetermined amount (predetermined rotation angle), the spring member 24 biases the lever 17 in the clockwise direction of the central axis CL1. That is, in a case where the photographer releases the finger placed on the lever 17 from the state shown in (C) in Fig. 4, the lever 17 is rotated in the clockwise direction by the biasing of the spring member 24. Then, the lever 17 is returned to the position shown in (B) of Fig. 4. In addition, in a case where the lever 17 is rotated to the third position in the mode in which the imaging instruction operation by the release switch 15 is restricted, the restriction on the imaging instruction operation may be released.

The imaging element 21 (see Fig. 5) is provided in the camera body 11. The imaging element 21 is held by a holder (not shown) and is fixed to an image plane side (photographer side) of the lens barrel 12. The imaging element 21 is, for example, a complementary metal oxide semiconductor (CMOS) image sensor, a charge coupled device (CCD) image sensor, or an organic thin film imaging element.

The imaging element 21 is an imaging element in which a length in the vertical direction Y is smaller than a length in the horizontal direction X in a case where the imaging element 21 is horizontally placed, that is, the upper surface 11D of the camera body 11 faces upward in the vertical direction. In addition, the imaging element 21 is not limited thereto and may be an imaging element in which the length in the vertical direction Y is larger than the length in the horizontal direction X in a case where the imaging element 21 is vertically placed, that is, the upper surface 11D of the camera body 11 faces upward in the vertical direction.

A display 22 and an electronic view finder 23 are provided in the camera body 11. The display 22 is disposed on the rear surface 11C of the camera body 11 and is a liquid crystal display (LCD), an organic electroluminescent display (OELD), or the like. The display 22 is used for live view display, captured image display, setting menu display, and the like. In the live view display, a captured image obtained by capturing an object image with the imaging element 21 is displayed on the display 22 in real time. In addition, a case where the captured image is displayed on the display 22 will be described below.

The electronic view finder 23 is provided in an upper portion of the rear surface 11C of the camera body 11. A live view is displayed on the electronic view finder 23, and the captured image obtained by capturing the object image with the imaging element 21 is displayed on the electronic view finder 23 in real time. The electronic view finder 23 can be turned on and off to switch display on the display 22 as necessary. Hereinafter, a case where the captured image is displayed on the display 22 will be mainly described.

### Electrical Configuration of Camera

As shown in Fig. 5, the controller 31 consists of a microcomputer comprising a CPU, a read only memory (ROM) that stores programs and parameters used by the CPU, a random access memory (RAM) that is used as a work memory of the CPU (all not shown), and the like and controls each unit of the digital camera 10.

The lever 17 is provided with, for example, a contact-type sensor that detects the amount of rotation and transmits a signal for detecting the amount of rotation to the controller 31 in a case where the lever 17 is rotated about the central axis CL 1. In addition, a mode switching signal from the mode dial 14, a release signal from the release switch 15, and a power on or off signal from the power switch 16 are input to the controller 31.

A shutter unit 32 is, for example, a focal plane shutter and is disposed between the imaging optical system 13 and the imaging element 21. The shutter unit 32 is provided to block an optical path between the imaging optical system 13 and the imaging element 21 and is changed between an open state and a closed state. The shutter unit 32 is in the open state in a case where a live view image and a video are captured. The shutter unit 32 is changed from the open state to the closed state in a case where a still image is captured. The shutter unit 32 is driven by a shutter motor 33. A motor driver 34 controls the driving of the shutter motor 33.

The driving of the imaging element 21 is controlled by the controller 31. The imaging element 21 has a light-receiving surface composed of a plurality of pixels (not shown) that are arranged in a two-dimensional matrix. Each pixel includes a photoelectric conversion element and performs photoelectric conversion on an object image formed on the light-receiving surface by the imaging optical system 13 to generate an imaging signal.

Further, the imaging element 21 comprises signal processing circuits such as a noise removal circuit, an auto gain controller, and an A/D conversion circuit (all not shown). The noise removal circuit performs a noise removal process on the imaging signal. The auto gain controller amplifies a level of the imaging signal to an optimum value. The A/D conversion circuit converts the imaging signal into a digital signal and outputs the digital signal from the imaging element 21 to a bus line 36. The output signal of the imaging element 21 is image data (so-called RAW data) having one color signal for each pixel.

An image memory 35 stores image data corresponding to one frame output to the bus line 36. An image data processing unit 37 reads out the image data corresponding to one frame from the image memory 35 and performs known image processing such as matrix calculation, a demosaicing process, a γ correction process, brightness and color difference conversion, and a resizing process.

The display driver 38 sequentially inputs the image data corresponding to one frame, which has been subjected to the image processing by the image data processing unit 37, to the display 22 or the electronic view finder 23. For example, the display 22 sequentially displays the live view image with a predetermined period. In addition, a case where the captured image is displayed on the display 22 will be described below.

A card interface (I/F) 41 is incorporated in a card slot (not shown) provided in the camera body 11 and is electrically connected to a memory card 42 inserted in the card slot. The card I/F 41 stores the image data subjected to the image processing by the image data processing unit 37 in the memory card 42. Further, in a case where the image data stored in the memory card 42 is reproduced and displayed, the card I/F 41 reads out the image data from the memory card 42.

### Display of Captured Image

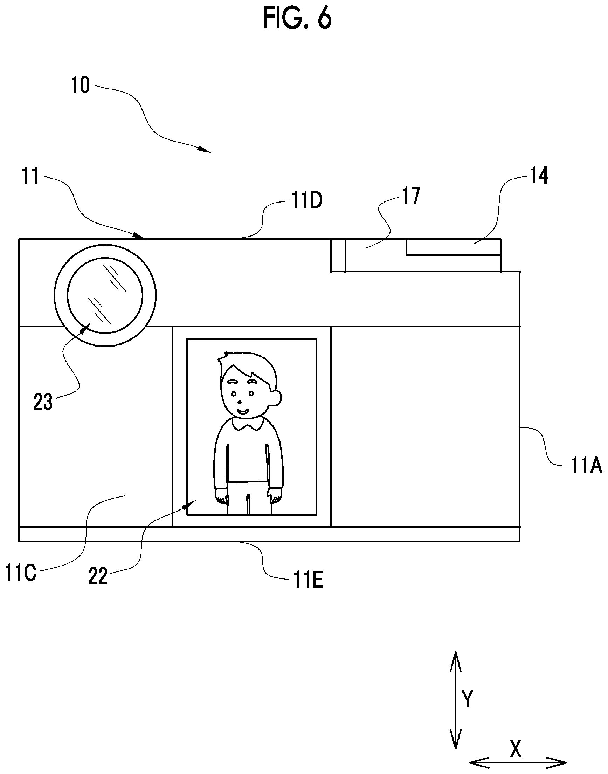

As shown in Fig. 6, the display 22 displays the captured image obtained by capturing the object image with the imaging element 21. In addition, the captured image is displayed on the display 22, for example, after imaging in the still image capture mode or the video capture mode and in a case where the image is played back in a playback mode. Further, the captured images shown in Fig. 6 and the subsequent drawings are images having a vertically long aspect ratio (a length in the vertical direction is larger than a length in the horizontal direction). However, the present invention is not limited thereto, and the captured images may be images having a horizontally long aspect ratio (the length in the vertical direction is smaller than the length in the horizontal direction).

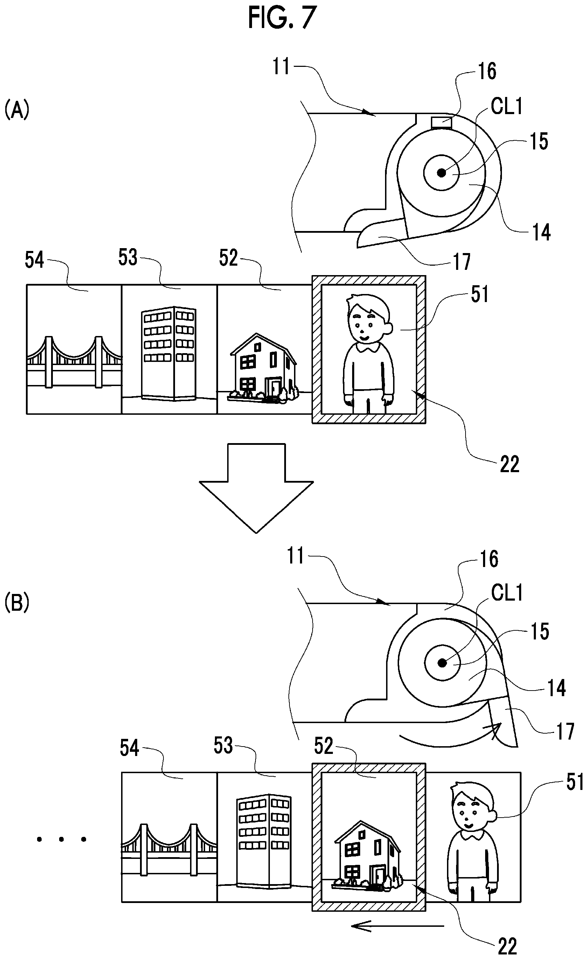

As shown in (A) of Fig. 7, first, a first captured image 51 is displayed on the display 22 (an inner portion of a hatched frame). In the present embodiment and a first modification example which will be described below, the first captured image 51 is a captured image captured last by the imaging element 21. In addition, a second captured image 52 is a captured image captured before the first captured image 51 is captured, a third captured image 53 is a captured image captured before the second captured image 52 is captured, and a fourth captured image 54 is a captured image captured before the third captured image 53 is captured. These captured images are recorded in the image memory 35 or the memory card 42.

As shown in (B) of Fig. 7, the controller 31 that has detected a signal of a rotation angle input by the operation of the lever 17 by the photographer, who is the user, controls the display driver 38 such that the first captured image 51 displayed on the display 22 is hidden and the second captured image 52 different from the first captured image 51 is displayed on the display 22. Specifically, in a case where the lever 17 is rotated counterclockwise about the central axis CL1 in a state in which the camera body 11 is viewed from above, the controller 31 changes the first captured image 51 displayed on the display 22 to the second captured image 52. In addition, the direction in which the lever 17 is rotated to change the first captured image 51 displayed on the display 22 to the second captured image 52 may change depending on the form of the lever 17.

In a case where the photographer releases the finger from the lever 17 after the first captured image 51 displayed on the display 22 is changed to the second captured image 52, the lever 17 is rotated in the clockwise direction by the biasing of the spring member 24 as described above. Then, the lever 17 is returned to the position shown in (A) of Fig. 7. Then, in a case where the photographer operates the lever 17 counterclockwise again, the controller 31 hides the second captured image 52 displayed on the display 22 and displays the third captured image 53 different from the second captured image 52 on the display 22.

In a case where the photographer releases the finger from the lever 17 after the second captured image 52 displayed on the display 22 is changed to the third captured image 53, the lever 17 is returned to the position shown in (A) of Fig. 7 as described above. Thereafter, the photographer repeats the operation of the lever 17 to change the captured image displayed on the display 22. In the present embodiment, the photographer can repeat the operation of the lever 17 to sequentially change the image from the last captured image to the past captured image in reverse chronological order.

As described above, in a case where the photographer wants to check the captured image in the digital camera 10 according to the embodiment of the present invention, the photographer can feed the captured image displayed on the display 22 with a very simple operation of operating the lever 17 while gripping the grip portion 11A.

### First Modification Example

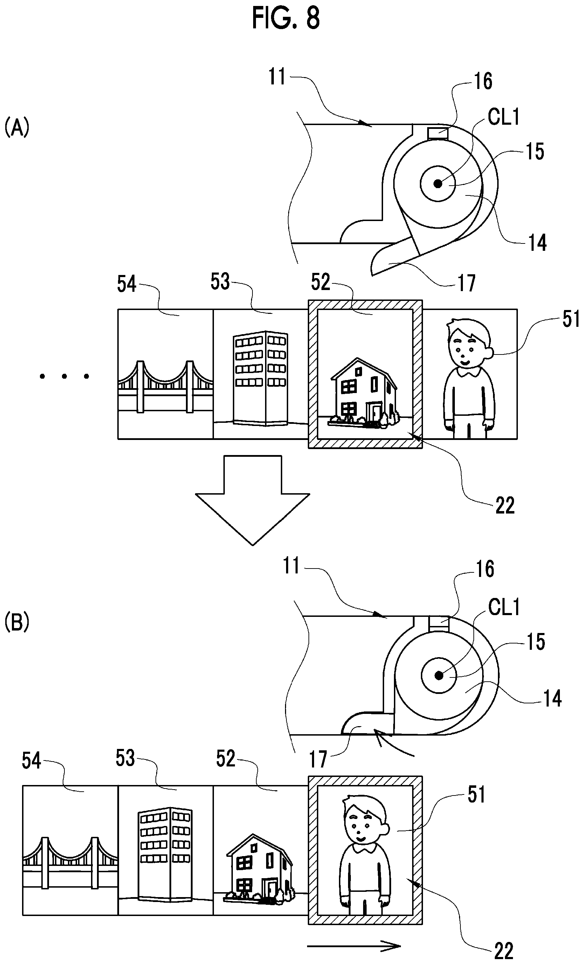

In the above-described embodiment, an example in which the first captured image 51 displayed on the display 22 is changed to the second captured image 52 captured before the first captured image 51 is captured by the operation of the lever 17 is given as an example. However, the present invention is not limited thereto. As shown in (A) of Fig. 8 and (B) of Fig. 8, the controller 31 may change the second captured image 52 displayed on the display 22 to the first captured image 51 in response to the operation of the lever 17.

In the present modification example, as shown in (A) of Fig. 8, first, the second captured image 52 is displayed on the display 22. (A) of Fig. 8 shows a case where the digital camera 10 is switched from the off state to the on state, and the lever 17 is biased by the spring member 24 to be rotated by a predetermined amount (predetermined rotation angle) in the counterclockwise direction of the central axis CL1. Therefore, the lever 17 is in a posture that is spaced apart from the camera body 11 by a predetermined distance.

Then, as shown in (B) of Fig. 8, the controller 31 that has detected the signal of the rotation angle input by the operation of the lever 17 by the user controls the display driver 38 such that the second captured image 52 displayed on the display 22 is hidden and the first captured image 51 is displayed on the display 22. Specifically, in a case where the lever 17 is rotated clockwise about the central axis CL 1 in a state in which the camera body 11 is viewed from above, the controller 31 changes the second captured image 52 displayed on the display 22 to the first captured image 51. In a case where the user releases the finger from the lever 17, the lever 17 is rotated by a predetermined amount in the counterclockwise direction by the biasing of the spring member 24. That is, the lever 17 is returned to the position shown in (A) of Fig. 8.

In the present modification example, the user can repeatedly operate the lever 17 to sequentially change the captured image captured in the past to a more recently captured image. As described above, in a case where the user wants to check the captured image, the user can feed the captured image displayed on the display 22 with a very simple operation of operating the lever 17 while gripping the grip portion 11A as in the first embodiment.

### Second Embodiment

In the first embodiment, the digital camera that displays one captured image in a case where the captured image is displayed on the display is given as an example. However, the present invention is not limited thereto and may be applied to a digital camera that displays a plurality of captured images on the display.

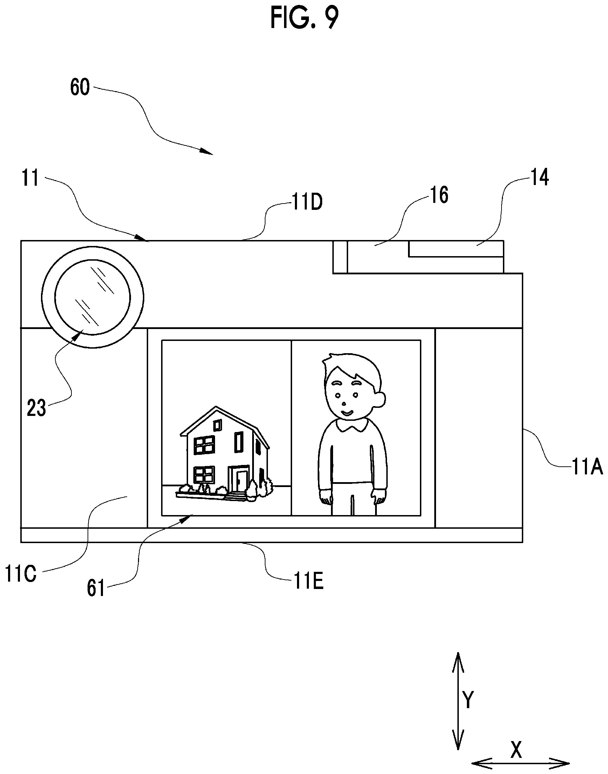

As shown in Fig. 9, a digital camera 60 according to the present embodiment displays two captured images on a display 61. In addition, the captured image is displayed on the display 61, for example, after imaging in the still image capture mode or the video capture mode and in a case where the image is played back in the playback mode. Further, the digital camera 60 has the same configurations as the digital camera 10 according to the first embodiment except for the display 61 and the content of the captured image displayed on the display 61. The same configurations are denoted by the same reference numerals, and a description thereof will be omitted.

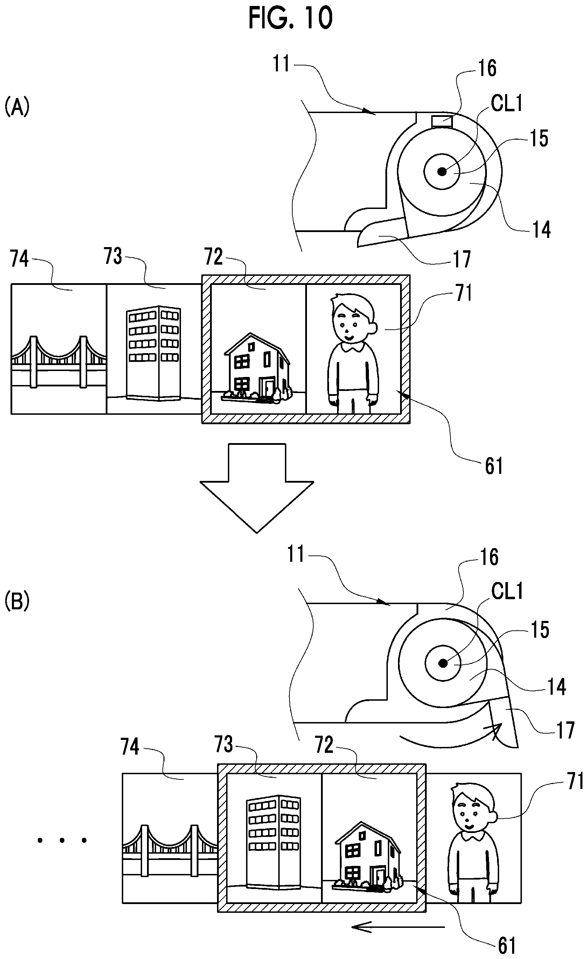

As shown in (A) of Fig. 10, first, a first captured image 71 and a second captured image 72, which are the plurality of captured images, are displayed on the display 61 (an inner portion of a hatched frame). In addition, for first to fourth captured images 71 to 74, similarly to the first to fourth captured images 51 to 54 according to the first embodiment, the first captured image 71 is a captured image captured last by the imaging element 21, and the second to fourth captured images 72 to 74 are captured images disposed in reverse chronological order from the first captured image 71.

As shown in (B) of Fig. 10, in a case where the lever 17 is operated once counterclockwise, the controller 31 of the digital camera 60 controls the display driver 38 such that a captured image disposed at one end (right end) among the plurality of captured images displayed on the display 61 is hidden and a captured image disposed immediately before a captured image disposed at the other end (left end) among the plurality of captured images displayed on the display 61 is displayed on the display 61. That is, the controller 31 hides the first captured image 71 disposed at one end (right end) of the first captured image 71 and the second captured image 72 displayed on the display 61 and displays the third captured image 73 disposed immediately before the second captured image 72 disposed at the other end (left end) on the display 61.

In a case where the user releases the finger from the lever 17 after the first captured image 71 is hidden and the third captured image 73 is displayed on the display 61, the lever 17 is rotated in the clockwise direction by the biasing of the spring member 24 as described above. Then, the lever 17 is returned to the position shown in (A) of Fig. 10.

Then, in a case where the user operates the lever 17 counterclockwise again, the controller 31 hides the second captured image 72 displayed on the display 61 and displays the fourth captured image 74 captured immediately before the third captured image 73 on the display 61. That is, the controller 31 of the digital camera 60 feeds the captured images one by one each time the lever 17 is operated once.

As described above, the captured image displayed on the display 61 is changed by the repeated operation of the lever 17 by the user. Therefore, similarly to the digital camera 10 according to the first embodiment, in the digital camera 60 according to the present embodiment, in a case where the user wants to check the captured image, the user can feed the captured image displayed on the display 61 with a very simple operation of operating the lever 17 while gripping the grip portion 11A.

Further, in the second embodiment, in a case where the lever 17 is operated once, the controller 31 performs control to hide the captured image disposed at one end among the plurality of captured images displayed on the display and to display, on the display, the captured image disposed immediately before the captured image disposed at the other end among the plurality of captured images displayed on the display. However, the present invention is not limited thereto. The captured image captured first among the plurality of captured images displayed on the display may be hidden, and the captured image captured immediately before the captured image captured first among the plurality of captured images displayed on the display may be displayed. That is, in the example shown in (A) of Fig. 10, in a case where the lever 17 is operated once counterclockwise, the controller 31 of the digital camera 60 may control the display driver 38 such that the second captured image 72 captured first of the first captured image 71 and the second captured image 72 displayed on the display 61 is hidden and the third captured image 73 captured immediately before the second captured image 72 is displayed on the display 61.

### Second Modification Example

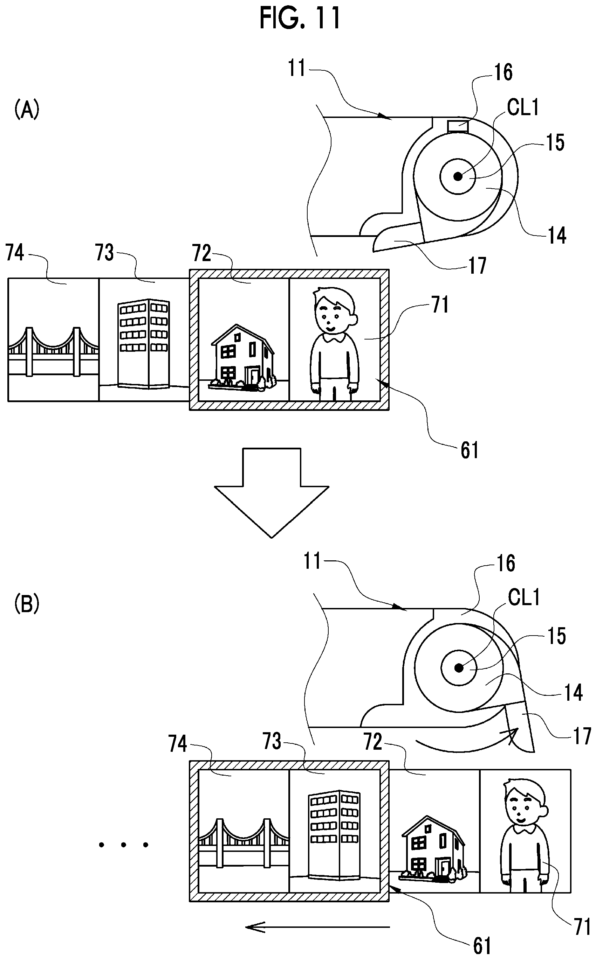

In the second embodiment, a case where, among the plurality of captured images displayed on the display, the captured images are fed one by one each time the lever is operated once is given as an example. However, the present invention is not limited thereto. As in a modification example shown in (A) of Fig. 11 and (B) of Fig. 11, in a case where the lever is operated once, all of the plurality of captured images displayed on the display may be fed.

As shown in (A) of Fig. 11, as in the second embodiment, the first captured image 71 and the second captured image 72, which are the plurality of captured images, are displayed on the display 61.

As shown in (B) of Fig. 11, in a case where the lever 17 is operated once counterclockwise, the controller 31 of the digital camera 60 controls the display driver 38 such that the first captured image 71 and the second captured image 72, which are all of the plurality of captured images displayed on the display 61, are hidden and that the captured images from the captured image disposed immediately before the captured image disposed at the other end (left end) among the plurality of captured images displayed on the display 61 to the captured image disposed the plurality of images before the captured image disposed at the other end are displayed on the display 61. Specifically, the third captured image captured immediately before the second captured image 72 and the fourth captured image 74 captured two (a plurality of) images before the second captured image 72 are displayed on the display 61.

In a case where the user releases the finger from the lever 17 after the first captured image 71 and the second captured image 72 are hidden and the third captured image 73 and the fourth captured image 74 are displayed on the display 61, the lever 17 is rotated in the clockwise direction by the biasing of the spring member 24 as described above. Then, the lever 17 is returned to the position shown in (A) of Fig. 11.

Then, in a case where the user operates the lever 17 counterclockwise again, the controller 31 hides the third captured image 73 and the fourth captured image 74 displayed on the display 61 and displays the captured images from the captured image captured immediately before the fourth captured image 74 to the captured image captured two images before the fourth captured image 74 on the display 61. That is, the controller 31 of the digital camera 60 feeds all of the plurality of captured images displayed on the display 61 each time the lever 17 is operated once.

As described above, the captured image displayed on the display 61 is changed by the repeated operation of the lever 17 by the user. Therefore, similarly to the digital camera 10 according to the first embodiment, in the digital camera 60 according to the present embodiment, in a case where the user wants to check the captured image, the user can feed the captured images displayed on the display 61 with a very simple operation of operating the lever 17 while gripping the grip portion 11A. Further, since all of the plurality of captured images displayed on the display 61 can be fed, it is possible to quickly perform the image feed operation.

### Third Modification Example

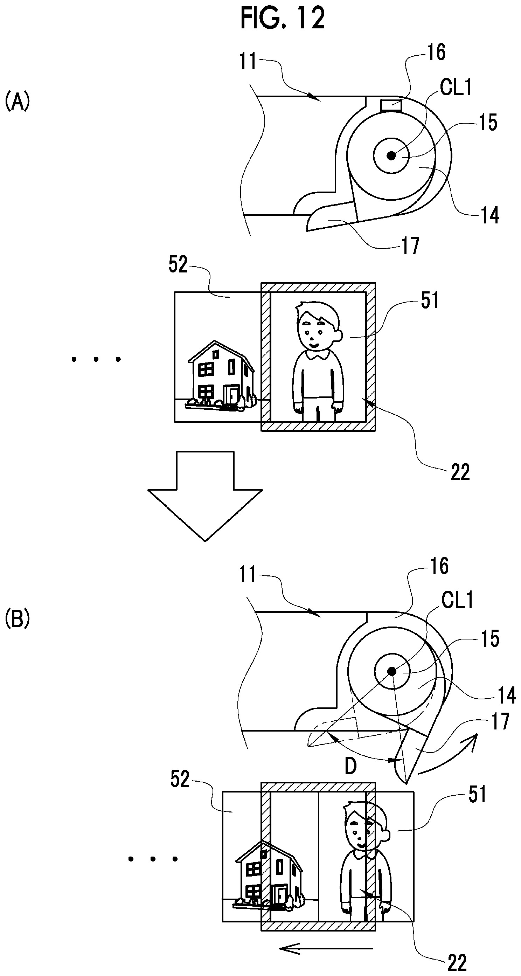

In each of the above-described embodiments and modification examples, an example has been described in which the feeding of one or a plurality of captured images is completed each time the lever 17 is operated once regardless of the operation amount of the lever. However, the present invention is not limited thereto. The lever 17 may be operated to hide at least a portion of the first captured image displayed on the display 22 and to display the second captured image on the display 22. Specifically, as shown in (A) of Fig. 12 and (B) of Fig. 12, the replacement amount of the captured image displayed on the display is changed according to the operation amount of the lever.

In the present modification example, as shown in (A) of Fig. 12, first, the first captured image 51 is displayed on the display 22 (an inner portion of a hatched frame). (A) of Fig. 12 shows a case where the digital camera 10 is switched from the off state to the on state, and the lever 17 is biased by the spring member 24 to be rotated by a predetermined amount (predetermined rotation angle) in the counterclockwise direction of the central axis CL1.

As shown in (B) of Fig. 12, in a case where the lever 17 is operated in the counterclockwise direction, the controller 31 changes the replacement amount of the captured image displayed on the display 22 according to the operation amount of the lever 17. The example shown in (B) of Fig. 12 is a case where an operation amount D of the lever 17 is 50%, and the replacement amount from the first captured image 51 to the second captured image is 50% according to the operation amount D of the lever 17. As described above, as the operation amount of the lever 17 is increased by 10%, 20%, 30%, ..., 50%, ..., the replacement amount of the image is also increased by 10%, 20%, 30%,..., 50%,.... In a case where the operation amount D of the lever 17 is 100% (the rotation angle of the lever 17 is the maximum value), the replacement of the captured image is also completed, that is, the replacement of the first captured image 51 is completely replaced by the second captured image 52.

### Fourth Modification Example

In addition, the present invention is not limited thereto, and a replacement speed of the captured image displayed on the display may be changed according to the operation amount of the lever. That is, as the operation amount D of the lever 17 is increased by 10%, 20%, 30%,..., 50%, ..., the replacement speed of the image is also increased by 10%, 20%, 30%, ..., 50%, .... In a case where the operation amount D of the lever 17 is 100% (the rotation angle of the lever 17 is the maximum value), the replacement speed of the captured image is also the maximum value.

Further, in each of the above-described embodiments and modification examples, the number of images that can be fed by one lever operation is predetermined. However, the present invention is not limited thereto. A captured image feed operation assigned to the lever operation may be set according to an input operation. In this case, for example, the number of captured images to be fed may be changed by the input operation on an operation button or a touch panel provided in the digital camera. That is, the setting may be changed between the setting in which the plurality of captured images displayed on the display are fed one by one by one lever operation as in the second embodiment and the setting in which all of the plurality of captured images displayed on the display are fed by one lever operation as in the second modification example.

The setting of the captured image feed operation assigned to the lever operation according to the input operation is not limited to the above. In a case where the replacement speed of the captured image displayed on the display is changed according to the operation amount of the lever as in the fourth modification example, the replacement speed of the captured image may be set by the input operation.

In addition, in each of the above-described embodiments and modification examples, in a case where the lever is rotated in the counterclockwise direction, the captured image is changed to the past captured image in reverse chronological order. In a case where the lever is rotated in the clockwise direction, the captured image is advanced and changed to the recently captured image. However, the image feed direction may be set in the reverse direction by the input operation. That is, in a case where the lever is rotated in the clockwise direction, the captured image may be changed to the past captured image in reverse chronological order. In a case where the lever is rotated in the counterclockwise direction, the captured image may be advanced and changed to the recently captured image.

In addition, in a case where the replacement amount of the captured image displayed on the display is changed according to the operation amount of the lever as in the third modification example, a setting in which, in a case where the lever operation is stopped midway, the image feed is stopped in a state in which the lever operation is stopped may be designated by the input operation. In this designated setting, for example, in a case where the operation of the lever 17 is stopped by the operation amount D, the replacement amount of the image is also stopped at a ratio corresponding to the operation amount D.

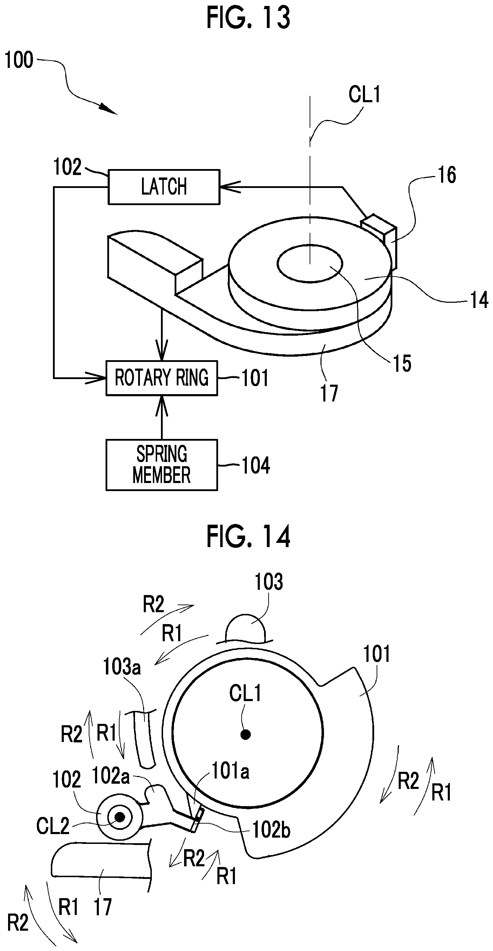

In the above-described embodiment, the lever 17 is locked at the first position (see (A) of Fig. 4) in a case where power is turned off and is unlocked at the second position (see (B) of Fig. 4) in a case where power is turned on. However, the lever 17 may be locked and unlocked by other methods. For example, as shown in Fig. 13, a dial 100 that is provided in the digital camera 10 is used to lock and unlock the lever 17. The dial 100 comprises the lever 17 (first member), a rotary ring 101 (second member) that is operatively associated with the lever 17, a latch 102 (third member) that is engaged with the rotary ring, a power lever 103 (fourth member) related to the operation of the power supply, and a spring member 104 (biasing member) that biases the rotary ring 101. In addition, the power lever 103 has substantially the same shape as the power switch 16 and is used to turn on and off the power supply like the power switch 16. However, the power lever 103 is different from the power switch 16 in an operation method for turning on and off the power supply.

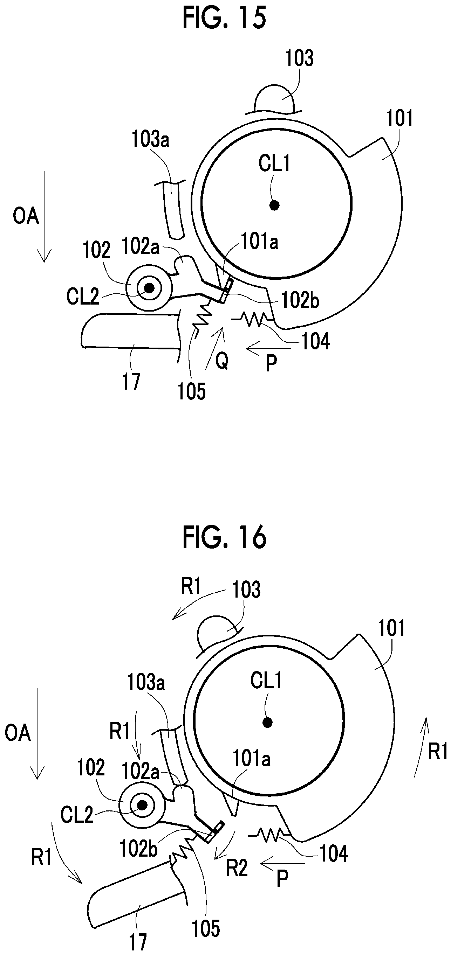

As shown in Fig. 14, the lever 17, the rotary ring 101, and the power lever 103 are rotatable about the central axis CL1 (first axis), and the latch 102 is rotatable about a central axis CL2 (second axis). The lever 17 is rotatable in a counterclockwise direction R1 (first direction) and a clockwise direction R2 (second direction) as in the above-described embodiments. The rotary ring 101 is engaged with an attachment portion of the lever 17 (see Fig. 19) and is rotatable in the counterclockwise direction R1 and the clockwise direction R2 in operative association with the movement of the lever 17. In addition, the rotary ring 101 is biased in a direction P intersecting the optical axis OA by a spring member 104 (see Fig. 15). In addition, the direction P may be the same as the horizontal direction X.

In a case where the power lever 103 is switched from a power-off position to a power-on position, the power lever 103 is rotated in the counterclockwise direction R1. As the power lever 103 is rotated in the counterclockwise direction R1, an operation piece 103a that is provided in the power lever 103 is also rotated in the counterclockwise direction R1. The operation piece 103a is provided along the outer periphery of the rotary ring 101 and is for operating the latch 102. On the other hand, the power lever 103 is rotated in the clockwise direction R2 in a case where the power lever 103 is switched from the power-on position to the power-off position. The operation piece 103a is also rotated in the clockwise direction R2 as the power lever 103 is rotated in the clockwise direction R2. The operation piece 103a comes into contact with a contact portion 102a to rotate the latch 102 in the clockwise direction R2. The latch 102 is biased in a direction Q toward the rotary ring 101 by a spring member 105 (see Fig. 15). Therefore, in a case where the operation piece 103a is separated from the contact portion 102a, the latch 102 is rotated in the counterclockwise direction R1 by the biasing force of the spring member 105.

As shown in Fig. 15, in a case where the power lever 103 is at the power-off position, a protruding portion 101a of the rotary ring 101 and a recessed portion 102b of the latch 102 are fitted to each other to lock the lever 17 at the first position. On the other hand, as shown in Fig. 16, in a case where the power lever 103 is at the power-on position, the latch 102 is rotated in the clockwise direction R2 in operative association with the rotation of the power lever 103 in the counterclockwise direction R1, and the protruding portion 101a and the recessed portion 102b are disengaged from each other to rotate the lever 17 to the second position along the counterclockwise direction R1. The disengagement between the protruding portion 101a and the recessed portion 102b is maintained by the spring member 104. The spring member 104 biases the rotary ring 101 in the direction P intersecting the optical axis OA to maintain the disengagement between the protruding portion 101a and the recessed portion 102b.

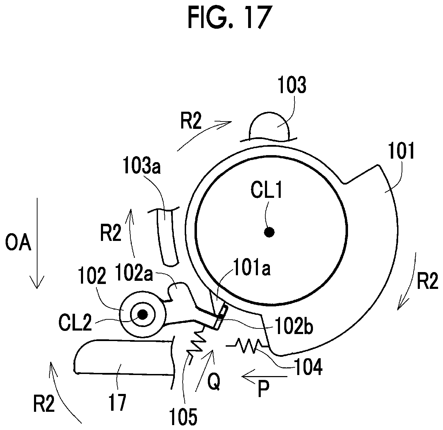

As shown in Fig. 17, in a case where the power lever 103 is switched from the power-on position to the power-off position, the latch 102 is rotated in operative association with the rotation of the power lever 103 in the clockwise direction R2, and the protruding portion 101a and the recessed portion 102b are fitted to each other to lock the lever 17 at the first position. The rotation of the latch 102 in the clockwise direction R2 is caused by the biasing force of the spring member 105.

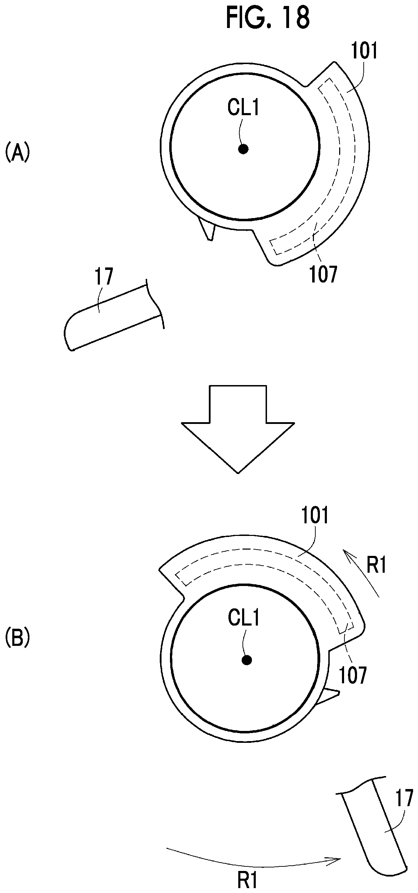

Further, in a case where the imaging instruction operation is restricted by the release switch 15 (fifth member), it is preferable to release the restriction on the imaging instruction operation in a case where the lever 17 at the second position shown in (A) of Fig. 18 is rotated to the third position shown in (B) of Fig. 18 along the clockwise direction R2. A contact-type sensor 107 that detects the third position is disposed in the rotary ring 101 in order to detect that the lever 17 has been rotated to the third position. In addition, the operation of the lever 17 from the second position to the third position is performed by the photographer as in the above-described embodiments. In a case where the photographer rotates the lever 17 to the third position by hand and then releases the hand, the lever 17 is returned to the second position by the biasing force of the spring member 104.

As shown in Fig. 19, the disposition position of the contact-type sensor 107 is opposite to the installation position of the lever 17 with the rotary ring 101 interposed therebetween. The contact-type sensor 107 comprises a brush 107a. The brush 107a comes into electrical contact with a circuit board 108 provided below the contact-type sensor 107. The brush 107a detects a pattern at a predetermined position in the circuit board 108 to detect that the lever has reached the third position. The circuit board 108 is also used to detect the imaging instruction operation by the release switch 15. In a case where the release switch 15 is pressed, the release switch 15 and a switch detection portion of the circuit board 108 come into electrical contact with each other to detect the imaging instruction operation by the release switch 15.

In addition, as shown in Fig. 19, it is preferable that the lever 17 is disposed between the camera body 11 and a spacer 109 (sixth member) and the spacer 109 is disposed along the central axis CL1. In the rotation operation of the lever 17, the photographer tends to apply force in the direction of gravity. In a case where force is applied to the lever 17 in the direction of gravity, the lever 17 may fall, and the rotational movement of the lever 17 may be hindered by interference with a member on the outer peripheral side of the lever 17, for example, the mode dial 14 (a region surrounded by a dotted line).

In contrast, in the configuration in which the lever 17 is disposed between the camera body 11 and the spacer 109, in a case where force is applied to the lever 17 in the direction of gravity, the lever 17 and the spacer 109 come into contact with each other first, which makes it possible to eliminate the interference with the mode dial 14. In addition, it is preferable that the spacer 109 is a flange type. It is preferable that the spacer 109 is provided on the inner peripheral side of the lever 17.

Further, as shown in Fig. 19, it is preferable that the power lever 103 (a member related to the operation of the power supply), the lever 17 (a member for an operation related to image display), the mode dial 14 (a member for an operation related to camera settings), and the release switch 15 (a member related to the imaging instruction operation) are disposed along the central axis CL1 in the dial 100. This disposition of the four members makes it possible to perform operations related to four functions without taking up a lot of space in the camera body 11.

In each of the above-described embodiments, a hardware structure of a processing unit that executes various processes, such as the controller 31, is each of the following various processors. The various processors include a central processing unit (CPU) which is a general-purpose processor that executes software (program) to function as various processing units, a graphics processing unit (GPU), a programmable logic device (PLD), such as a field programmable gate array (FPGA), which is a processor whose circuit configuration can be changed after manufacture, and a dedicated electric circuit which is a processor having a dedicated circuit configuration designed to execute various processes.

One processing unit may be configured by one of the various processors or by a combination of two or more processors of the same type or different types (for example, a combination of a plurality of FPGAs or a combination of a CPU and an FPGA). Further, a plurality of processing units may be configured by one processor. A first example of the configuration in which a plurality of processing units are configured by one processor is an aspect in which one processor is configured by a combination of one or more CPUs and software and functions as a plurality of processing units. A representative example of this aspect is a client computer or a server computer. A second example of the configuration is an aspect in which a processor that implements the functions of the entire system including a plurality of processing units using one integrated circuit (IC) chip is used. A representative example of this aspect is a system-on-chip (SoC). As described above, various processing units are configured using one or more of the various processors as a hardware structure.

In addition, specifically, an electric circuit (circuitry) obtained by combining circuit elements, such as semiconductor elements, can be used as the hardware structure of the various processors.

In each of the above-described embodiments, the digital camera in which the imaging optical system 13 is fixed to the camera body 11 is given as an example. However, the present invention is not limited thereto and may be applied to a digital interchangeable lens camera in which the imaging optical system is interchangeable with respect to the camera body. Further, in each of the above-described embodiments, the lens barrel 12 that does not have a zoom lens is given as an example. However, the present invention is not limited thereto, and the imaging optical system 13 may include a zoom lens. In addition, the present invention can be applied to smartphones and cameras, such as video cameras, in addition to the digital camera.

### Explanation of References

10: digital camera
11: camera body
11A: grip
11B: front surface
11C: rear surface
11D: upper surface
11E: lower surface
12: lens barrel
13: imaging optical system
14: mode dial
15: release switch
15a: spring
16: power switch
17: lever
18: flash device
19: illumination device
21: imaging element
22: display
23: electronic view finder
24: spring member
31: controller
32: shutter unit
33: shutter motor
34: motor driver
35: image memory
36: bus line
37: image data processing unit
38: display driver
41: card interface (I/F)
42: memory card
43: locking mechanism
51: first captured image
52: second captured image
53: third captured image
54: fourth captured image
60: digital camera
61: display
71: first captured image
72: second captured image
73: third captured image
74: fourth captured image
100: dial
101: rotary ring
101a: protruding portion
102: latch
102a: contact portion
102b: recessed portion
103: power lever
103a: operation piece
104, 105: spring member
107: contact-type sensor
107a: brush
108: circuit board
109: spacer
CL1, CL2: central axis
D: operation amount
P, Q: direction

## Claims

1. A digital camera comprising:
a camera body having a front surface and a rear surface;
an imaging element that captures an object image;
a grip portion that is provided at any one of a left end or a right end in a case where the camera body is viewed from the front surface;
a first member that is provided near the grip portion and on an upper surface side of the camera body;
a display that is disposed on the rear surface of the camera body and displays a captured image obtained by capturing the object image with the imaging element; and
a processor,
wherein the processor is configured to, upon operation of the first member, hide at least a portion of a first captured image displayed on the display, and display on the display a second captured image different from the first captured image.

2. The digital camera according to claim 1,
wherein the second captured image is an image captured before the first captured image is captured, and
the processor is configured to:
in a case where the camera body is viewed from above and the first member is rotated, change the displayed first captured image to the second captured image.

3. The digital camera according to claim 1,
wherein the digital camera has a power supply,
in a case where the power supply is in an off state and the camera body is viewed from above, the first member is at a first position where the first member does not protrude from an outer shape of the camera body, and
in a case where the power supply is switched from the off state to an on state and the camera body is viewed from above, the first member moves to a second position where the first member protrudes from the outer shape of the camera body.

4. The digital camera according to claim 3, further comprising:
a locking mechanism that locks the first member,
wherein the first member is locked by the locking mechanism at the first position and is unlocked at the second position.

5. The digital camera according to claim 3, further comprising:
a second member that is operatively associated with the first member;
a third member that is engaged with the second member;
a fourth member that is related to an operation of the power supply; and
a biasing member that biases the second member,
wherein the first member, the second member, and the fourth member are rotatable about a first axis,
the third member is rotatable about a second axis,
in a case where the fourth member is at a power-off position, a protruding portion of the second member and a recessed portion of the third member are fitted to each other to lock the first member at the first position, and
in a case where the fourth member is at a power-on position, the third member is rotated in operative association with a rotation of the fourth member in a first direction, the protruding portion of the second member and the recessed portion of the third member are disengaged from each other to rotate the first member to the second position along the first direction, and the disengagement is maintained by the biasing member.

6. The digital camera according to claim 5,
wherein the biasing member biases the first member in a direction intersecting an optical axis.

7. The digital camera according to claim 5,
wherein, in a case where the fourth member is switched from the power-on position to the power-off position, the third member is rotated in operative association with a rotation of the fourth member in a second direction, and the protruding portion of the second member and the recessed portion of the third member are fitted to each other to lock the first member at the first position.

8. The digital camera according to claim 1,
wherein the second captured image is an image captured before the first captured image is captured, and
the processor is configured to:
in a case where the camera body is viewed from above and the first member is rotated clockwise, change the displayed second captured image to the first captured image.

9. The digital camera according to claim 1,
wherein a plurality of captured images are displayed on the display, and
the processor is configured to:
in a case where the first member is operated once, hide a captured image disposed at one end of the displayed captured images, and display, on the display, a captured image disposed immediately before the captured image disposed at the other end of the displayed captured images.

10. The digital camera according to claim 1,
wherein a plurality of captured images are displayed on the display, and
the processor is configured to:
in a case where the first member is operated once, hide all of the plurality of captured images displayed on the display, and display, on the display, captured images from a captured image disposed immediately before the captured image disposed at the other end of the displayed captured images, up to a captured image disposed the number of the plurality of images positions before that end.

11. The digital camera according to claim 1,
wherein the processor is configured to change a replacement amount of the displayed captured images according to an operation amount of the first member.

12. The digital camera according to claim 1,
wherein the processor is configured to change a replacement speed of the displayed captured images according to an operation amount of the first member.

13. The digital camera according to claim 1,
wherein the processor is configured to set a captured image feed operation assigned to the operation of the first member based on an input operation.

14. The digital camera according to claim 1,
wherein, in a case where an upper surface of the camera body faces upward in a vertical direction, a length of the imaging element in the vertical direction is larger than a length of the imaging element in a horizontal direction.

15. The digital camera according to claim 1, further comprising:
a fifth member that performs an imaging instruction operation,
wherein the first member is rotatable about a first axis,
the fifth member is disposed along the first axis, and
in a case where the camera body is viewed from above and the first member is rotated to a third position where the first member protrudes from an outer shape of the camera body, a restriction on the imaging instruction operation is released.

16. The digital camera according to claim 15, further comprising:
a second member that is rotated about the first axis in operative association with the first member,
wherein a contact-type sensor that detects the third position is disposed in the second member

17. The digital camera according to claim 1, further comprising:
a sixth member that is disposed along a first axis,
wherein the first member is disposed between the camera body and the sixth member.

18. A dial of a digital camera, the dial comprising:
a first member;
a second member that is operatively associated with the first member;
a third member that is engaged with the second member;
a fourth member that is related to an operation of a power supply; and
a biasing member that biases the second member,
wherein the first member, the second member, and the fourth member are rotatable about a first axis,
the third member is rotatable about a second axis,
in a case where the fourth member is at a power-off position, a protruding portion of the second member and a recessed portion of the third member are fitted to each other to lock the first member at a first position, and
in a case where the fourth member is at a power-on position, the third member is rotated in operative association with a rotation of the fourth member in a first direction, the protruding portion and the recessed portion are disengaged from each other to rotate the first member to a second position along the first direction and the disengagement is maintained by the biasing member.

19. The dial of a digital camera according to claim 18,
wherein the biasing member biases the first member in a direction intersecting an optical axis.

20. The dial of a digital camera according to claim 18,
wherein, in a case where the fourth member is switched from the power-on position to the power-off position, the third member is rotated in operative association with a rotation of the fourth member in a second direction, and the protruding portion and the recessed portion are fitted to each other to lock the first member at the first position.

21. The dial of a digital camera according to claim 18, further comprising:
a fifth member that performs an imaging instruction operation,
wherein the fifth member is disposed along the first axis, and
in a case where the first member is rotated to a third position along the first direction, a restriction on the imaging instruction operation is released.

22. The dial of a digital camera according to claim 21,
wherein a contact-type sensor that detects the third position is disposed in the second member.

23. The dial of a digital camera according to claim 18, further comprising:
a sixth member that is disposed along the first axis,
wherein the first member is disposed between a camera body and the sixth member.

24. A dial of a digital camera, the dial comprising:
a member related to an operation of a power supply, a member for an operation related to image display, a member for an operation related to camera settings, and a member related to an imaging instruction operation that are disposed along a first axis.
